# EUROPÄISCHE PATENTANMELDUNG

(11) **EP 3 648 081 A1**
(43) Veröffentlichungstag der Anmeldung: **06.05.2020**
(21) Anmeldenummer: 19203488.2
(22) Anmeldetag: 16.10.2019
(51) Int. Cl.: G08G 5/00

(54) **VERFAHREN ZUM BETRIEB EINES ZUMINDEST ZEITWEISE UNBEMANNTEN LUFTFAHRZEUGS SOWIE EIN DERARTIGES LUFTFAHRZEUG**

(30) Priorität: 31.10.2018 DE 102018218715
(71) Anmelder: Airbus Defence and Space GmbH, 82024 Taufkirchen (DE)
(72) Erfinder: MEYER, Jörg, 84048 Mainburg (DE); HEUER, Thomas, 85391 Allershausen (DE); LOHMILLER, Winfried, 85354 Freising (DE)
(74) Vertreter: Isarpatent

(57) **Zusammenfassung**

Offenbart wird ein Verfahren zum Betrieb eines zumindest zeitweise unbemannten Luftfahrzeugs (10), wobei ein Flugvorgang des Luftfahrzeugs (10) gemäß eines zuvor freigegebenen Flugplans in einem von wenigstens einer Kontrollinstanz (31) kontrollierten Luftraum durchgeführt wird. Dabei wird eine Flugrichtung des Luftfahrzeugs (10) während des Flugvorgangs über eine Steuereinrichtung bestimmt, die über wenigstens eine Datenverbindung (12, 14, 16) mittels einer Steuerinstanz beeinflussbar ist, wobei die Datenverbindung (12, 14, 16) während des Flugvorgangs zumindest zeitweise nicht zur Verfügung steht, und durch die Steuereinrichtung wird anhand von ersten Daten zumindest eines ersten Sensors eine Gefahren- und/oder Notfallsituation identifiziert, die eine Abweichung von dem freigegebenen Flugplan erforderlich macht. Um ein Verfahren zur Verfügung zu haben, das es einem zumindest zeitweise unbemannten Luftfahrzeug ermöglicht, mit bestimmte Gefahren- und/oder Notfallsituationen eigenständig umgehen zu können, wird durch die Steuereinrichtung anhand von zweiten Daten wenigstens eines zweiten Sensors eine der Gefahren- und/oder Notfallsituation ausweichende, ein oder mehrere Ausweichmanöver umfassende Ausweichroute (41, 42) des Luftfahrzeugs (10) ermittelt, über die zu ermittelnde Ausweichroute (41, 42) WIRD zumindest zwischenzeitlich ein Zielgebiet angesteuert, das mit einem möglichst geringen Aufkommen an Luftverkehr beaufschlagt ist; und das oder die notwendigen Ausweichmanöver der Ausweichroute (41, 42) werden anhand der zweiten Daten durch die Steuereinrichtung in eigenverantwortlicher Staffelung durchgeführt.

## Beschreibung

Die Erfindung betrifft ein Verfahren zum Betrieb eines zumindest zeitweise unbemannten Luftfahrzeugs, wobei ein Flugvorgang des Luftfahrzeugs gemäß eines zuvor freigegebenen Flugplans in einem von wenigstens einer Kontrollstation kontrollierten Luftraum durchgeführt wird, wobei eine Flugrichtung des Luftfahrzeugs während des Flugvorgangs über eine Steuereinrichtung bestimmt wird, die über wenigstens eine Datenverbindung mittels einer Steuerinstanz beeinflussbar ist, wobei die Datenverbindung während des Flugvorgangs zumindest zeitweise nicht zur Verfügung steht, und wobei durch die Steuereinrichtung anhand von ersten Daten zumindest eines ersten Sensors eine Gefahren- und/oder Notfallsituation identifiziert wird, die eine Abweichung von dem freigegebenen Flugplan erforderlich macht.

Außerdem betrifft die Erfindung ein zumindest zeitweise unbemanntes Luftfahrzeug welches nach einem zuvor freigegebenen Flugplan einen kontrollierten Luftraum durchfliegt, bei welchem eine Datenverbindung, über welche das Luftfahrzeug steuerbar ist oder gesteuert wird, bei Durchfliegen des Luftraums zumindest zeitweise nicht zur Verfügung steht, und welches anhand von ersten Daten eines ersten Sensors eine Gefahren- und/oder Notfallsituation identifiziert, die eine Abweichung von dem freigegebenen Flugplan erforderlich macht.

Unter Bedingungen, bei denen die Datenverbindung zwischen dem das Luftfahrzeug fernsteuernden Piloten und dem Luftfahrzeug selbst verloren geht, kann das zumindest zeitweise unbemannte Luftfahrzeug, das in kontrolliertem Luftraum betrieben wird, also die Notwendigkeit erkennen, von der zuvor freigegebenen Flugroute abzuweichen, bspw. zur Umgehung schwerwiegender Wetterbedingungen, bei Motorschaden, Systemausfall, Hagel, Brennstoffknappheit oder dergleichen Umständen mehr ohne dass diese Aufzählung Anspruch auf Vollständigkeit erhöbe. Dabei stellt die Situation, dass Schlechtwetter umflogen werden soll, natürlich keine Notfallsituation, sondern lediglich eine potentielle, durch Umplanung vermeidbare Gefahr dar.

Unbemannte Luftfahrzeuge (in der Folge wird dieser Begriff synonym mit den Abkürzungen RPAS (Remotely Piloted Aircraft System), UAV (Unmanned Aerial Vehicle) oder UAS (Unmanned Aerial System) verwendet) werden vermehrt zum Transport von Lasten, für Überwachungs- oder Aufklärungsaufgaben oder auch militärische Aufgaben eingesetzt, von vielen wird eine solche Möglichkeit auch als Zukunft für den Personentransport angesehen. Ein Luftfahrzeug kann jedoch auch von einem oder mehreren Piloten gesteuert sein, die aber aus unterschiedlichen Gründen jedenfalls für eine gewisse Zeitdauer nicht zur Verfügung stehen können, weswegen die Formulierung zumindest zeitweise unbemannt gewählt wurde. Begrifflich meint "unbemannt" selbstredend nur eine Cockpitbesatzung, unabhängig hiervon können Menschen an Bord des Luftfahrzeugs sein oder auch nicht, deren An- oder Abwesenheit bleibt jedoch mit Blick auf die aus Steuerung des UAV ohne Einfluss.

Dabei fliegt das betreffende Luftfahrzeug in der Regel durch einen von untereinander kommunizierenden, bodenbasierten Kontrollstationen der Flugsicherung (ATC, Air Traffic Control) überwachten Luftraum nach einem Flugplan, der vor Antritt des Flugvorgangs einzureichen und zu genehmigen ist. Als einziger tatsächlieher Unterschied eines unbemannten zu einem bemannten Flugvorgang kann dabei angesehen werden, dass ein für Flugbewegungen und deren Änderungen bei willkürlicher Steuerung verantwortlicher Pilot (PIC, Pilot In Command oder PIL, Pilot In the Loop, und insbesondere auch RP für Remote Pilot genannt) nicht gleichzeitig in dem Luftfahrzeug anwesend ist, sondern an einer anderen Stelle, einer sogenannten RPS (Remote Pilot Station) Steuerbefehle gibt und Systeme des Luftfahrzeugs (mit) überwacht. Die ATC wiederum ist dafür zuständig, den Remote Pilot durch die Bereitstellung von Informationen zu unterstützen, den durch die in dem Luftraum befindlichen Luftfahrzeuge verursachten Verkehrsfluss zu organisieren und abzuwickeln und dabei durch Staffelung der Luftfahrzeuge Kollisionen zu vermeiden.

Die Fähigkeit bzw. Möglichkeit, auf das Verhalten des unbemannten Luftfahrzeug während des Fluges Einfluss zu nehmen, wird durch ein Datenverbindungssystem zur Verfügung gestellt, das unterschiedliche Steuer- und Kommunikationsfähigkeiten etabliert. Dieser auch C2 (Command & Control)-Link genannte Datenlink kann über eine LOS (Line Of Sight) -Verbindung oder eine BLOS (Beyond Line Of Sight, also Satelliten-)-Verbindung realisiert werden, was naturgemäß mit einer gewissen Ausfallwahrscheinlichkeit behaftet ist. In einem bemannten Flugzeug würde der Pilot in einer Gefahren- oder Notfallsituation eine Alternativroute auswählen und initiieren und die Flugsicherung anrufen, um eine Abweichung vom Originalflugplan genehmigt zu bekommen. Da dies unter C2-Verbindungsverlust für das zumindest zeitweise unbemannte Luft- oder Raumfahrzeug nicht direkt möglich ist, wird in solchen Zuständen das Luftfahrzeug erfindungsgemäß einen speziellen Weg ermitteln, um vom genehmigten Flugplan abzuweichen.

Der RP kann über den erwähnten Datenlink den Flug des zumindest zeitweise unbemannten Luftfahrzeugs beispielsweise durch Ansteuern von Komponenten der Flugsteuerung, des Antriebssystems oder der Fahrwerkseinrichtung steuern, die Gefahrvermeidungssysteme (D&A, DAA, Detect And Avoid) des Luftfahrzeugs überwachen und steuern und beispielsweise Funktionen wie ein sogenanntes "handover" zwischen Kontrollstationen der Flugsicherung oder mehreren sogenannten Remote Pilot Stationen (RPS) beim Flugvorgang oder die Aufzeichnung von Flugdaten unterstützen.

Weiter können Flugparameter und Warnungen ohne Anspruch auf Vollständigkeit bspw. von Aktuatorik, Avionik u.a. mit Navigationssystem(en), Sensoren und Kommunikationssystemen, Klimasystem, Triebwerk, Struktur, Wetterradar der Steuereinrichtung als Flugkontrollsystem des RPAS überwacht und an den nicht anwesenden Piloten übermittelt werden. Schließlich ist es auch möglich, hierbei das zumindest zeitweise unbemannte Luftfahrzeug als sogenanntes Relay für ein weiteres Luftfahrzeug oder auch ein anderes zumindest zeitweise unbemanntes Fahrzeug am Boden zu nutzen.

Die Funktionen der Sprach- und/oder Datenübertragung zwischen dem Luftfahrzeug und dem Pilot, einer Leitstelle oder anderen Piloten werden durch die Datenverbindung zur Verfügung gestellt. Solche Funktionen beispielsweise bei Verbindung von mehreren RPAS etwa durch kommerzielle Telekommunikationsnetzwerk-Provider, die den Datenlink vorhalten, zur Verfügung gestellt werden, wobei hier die Qualität der Verbindung selbst und des Dienstes (QoS) durchaus wechseln können. Existiert zwischen einer Datenübertragungsstation und dem Luftfahrzeug keine Sichtverbindung, wird für Übertragungen gegebenenfalls auf Satellitenverbindungen zurückgegriffen.

Zum Austausch von Daten zwischen Luftfahrzeugen und der Flugverkehrskontrolle ATC kann der Steuereinrichtung des RPAS selbstständig eine Datenfunkverbindung als eine VDL - Datenfunkverbindung, insbesondere als sogenannte Mode2-Verbindung, die auch CPDLC (Controller Pilot Data Link Communication) genannt wird, etabliert werden. VDL (von VHF Data Link) ist ein Verfahren, um Daten zwischen Flugzeugen und Bodenstationen auszutauschen. Mode2 ist ein verbreiteter Kommunikationsstandard, die Kommunikation würde auch mit Mode3 mit mehreren Kanälen oder der Weiterentwicklung Mode4 funktionieren.

Schon prinzipiell ist ein zeitweiser Ausfall der Datenverbindung zwischen RP und RPAS jederzeit zumindest nicht vollständig auszuschließen, weswegen diese Situation selbstverständlich auch dann auftreten kann, wenn durch die Steuereinrichtung anhand von ersten Daten zumindest eines ersten Sensors eine Gefahren- und/oder Notfallsituation identifiziert wird, die eine Abweichung von dem freigegebenen Flugplan erforderlich macht. Dabei kann es zunächst dahingestellt sein, welche Art von Sensor(en) die betreffende Gefahren- und/oder Notfallsituation "auslösen". Zu denken wäre beispielsweise sowohl an Flugkontroll- und Managementsysteme, etwa ein die Triebwerke überwachendes ECAM (Electronic Centralized Aircraft Monitoring), an ein Wetterradar, oder auch ein Gefahrvermeidungs- oder ein Kollisionswarnsystem, wie beispielsweise ein in verschiedenen Implementierungen mögliches ACAS ((Airborne Collision Avoidance System) wie beispielsweise TCAS II (Traffic Alert and Collision Avoidance System), deren Warnungen ggf. eine Änderung der Flugtrajektorie notwendig machen könnten.

Es ist daher die Aufgabe der vorliegenden Erfindung, ein Verfahren zur Verfügung zu stellen, das es einem zumindest zeitweise unbemannten Luftfahrzeug ermöglicht, mit bestimmte Gefahren- und/oder Notfallsituationen eigenständig umgehen zu können.

Diese Aufgabe wird erfindungsgemäß durch die kennzeichnenden Merkmale des Anspruchs 1 gelöst. Die Lösung besteht demnach insbesondere darin, dass seitens einer Steuereinrichtung des Luftfahrzeugs anhand von zweiten Daten wenigstens eines zweiten Sensors eine der Gefahren- und/oder Notfallsituation ausweichende, ein oder mehrere Ausweichmanöver umfassende Ausweichroute des Luftfahrzeugs ermittelt wird, wobei die zu ermittelnde Ausweichroute ein Zielgebiet ansteuert, das mit einem möglichst geringen Aufkommen an Luftverkehr beaufschlagt ist; und wobei das oder die notwendigen Ausweichmanöver der Ausweichroute anhand der zweiten Daten durch die Steuereinrichtung in eigenverantwortlicher Staffelung durchgeführt werden.

Das von der Datenverbindung und damit von externen Steuerbefehlen durch den PIC abgeschnittene Luftfahrzeug führt erfindungsgemäß also eine eigenverantwortliche Staffelung bzw. Verkehrstrennung durch, die auch *self-separation* (Selbsttrennung) genannt wird, und ermittelt durch seine Steuereinrichtung anhand von zweiten Daten wenigstens eines zweiten Sensors eine der Gefahren- und/oder Notfallsituation ausweichende, ein oder mehrere Ausweichmanöver umfassende Ausweichroute. Um diese anschließend abfliegen zu können, versteht sich das Vorhandensein eines Autopilotensystems in dem RPAS von selbst.
Um die erwähnte self-separation mit reduziertem Aufwand betreiben zu können, und trotzdem einen kollisionsfreien Flugvorgang gewährleisten zu können, wird dabei zunächst ein Zielgebiet angesteuert, das ein möglichst geringes Luftverkehrsaufkommen aufweist, so dass die Ausweichroute bzw. die sie repräsentierenden Ausweichmanöver den umgebenden Luftverkehr (air traffic) möglichst wenig beeinträchtigen und das Kollisionsrisiko auf diese Weise minimiert wird.

Weitere vorteilhafte Ausgestaltungen des Verfahrens sind Gegenstand der Unteransprüche.

Bei einer vorteilhaften Ausführung des erfindungsgemäßen Verfahrens wird durch das Luftfahrzeug bei Übergang in die eigenverantwortliche Staffelung solange dauerhaft ein Signal ausgesandt, durch welches andere Teilnehmer des Luftverkehrs über diesen Umstand informiert werden. Der Luftverkehr wird anhand des Signals davon in Kenntnis gesetzt, dass das Luftfahrzeug seinen Weg ab Aussendung des Signals unter einem Notfallregime fortsetzt. Hierbei ist vorstellbar, das betreffende Signal mit zusätzlichen Informationen auszustatten, die ggf. die Art des Notfalls kategorisierten könnten.

In einer vorteilhaften Variante des Verfahrens kann die eigenverantwortliche Staffelung bei der Durchführung des oder der Ausweichmanöver ohne vorherige Genehmigung durch die wenigstens eine Kontrollstation stattfinden. Nachdem gegebenenfalls zwischen dem PiC und der Kontrollstation des ATC keine Kommunikationsmöglichkeit besteht, muss dann die Staffelung nicht mehr in einem Verfahren ausgehandelt werden.

Bei einer weiteren vorteilhaften Variante des Verfahrens kann als zusätzliches Kriterium die Verringerung von Kollisionspotential mit anderen Luftfahrzeugen auf dem Weg in das Zielgebiet angestrebt werden. Wie einzelne Kriterien bei der Ermittlung der Ausweichroute gewichtet werden, kann eine Frage der Implementierung des Notfallregimes sein, wobei das geringe Verkehrsaufkommen im Zielgebiet aufgrund der eigenverantwortlichen Staffelung den Vorzug genießt. Auch weitere Überlegungen, etwa hinsichtlich der Wirtschaftlichkeit der betreffenden Ausweichroute im Ganzen oder einzelner Ausweichmanöver könnten eine Rolle als ein Zusatzkriterium spielen. Diese hängen auch von der Art der Notfall- oder Gefahrensituation ab und wären dann entsprechend zu implementieren.

Ist eine eigenverantwortliche Staffelung unter dem Notfallregime der Ausweichroute einmal etabliert, bleibt sie zweckmäßigerweise zur Erhöhung der Sicherheit bei der Durchführung des oder der Ausweichmanöver mindestens bis zur Wiederherstellung des Datenlinks mit der Steuerinstanz der Steuereinrichtung des Luftfahrzeugs erhalten. Vorteilhaft kann diese Staffelung auch bei wiederhergestellter Datenverbindung aufrechterhalten werden, beispielsweise dann, wenn die Ausweichroute bereits weitgehend durch das UAV abgeflogen wurde und eine Wiederaufnahme der flugverkehrskontrollbasierten Verkehrstrennung (ATCseparation) zu dem konkreten Zeitpunkt nicht sinnvoll erscheint.

Eine andere vorteilhafte Ausführungsform des Verfahrens kann aber auch so ausgestaltet sein, dass bei erneuter Etablierung der Datenverbindung die eigenverantwortliche Staffelung unterbrochen wird und das Luftfahrzeug auf einen anderen oder den ursprünglichen Kurs zurückgeführt wird.

Eine vorteilhafte Weiterbildung des erfindungsgemäßen Verfahrens kann darauf beruhen, dass die ersten Daten durch wenigstens einen nicht-kooperativen ersten Sensor zur Verfügung gestellt werden, da diese Art von Sensoren nicht auf Zusammenarbeit mit anderen Systemen oder deren Sensoren angewiesen ist, und derart eine unabhängige Datenermittlung erlaubt. Nicht kooperative Sensoren sind demnach hinsichtlich der Datenerfassung autonom und verlassen sich zu diesem Zweck nicht auf eine Zusammenarbeit mit dedizierten anderen Sensoren oder Diensten. Nicht kooperative Sensoren können aktive oder passive Sensoren sein, z.B. aktive oder passive Funksensoren (RADAR), Wetterradarsensoren, elektrooptische Sensoren, Laser-Entfernungsmesser, LIDAR-Sensoren, akustische Sensoren oder Infrarotsensoren. Prinzipiell muss der mindestens eine erste Sensor nicht zwingend an Bord des UAV angeordnet sein.

Eine andere vorteilhafte Weiterbildung des erfindungsgemäßen Verfahrens basiert auf dem Umstand, dass die zweiten Daten durch mindestens einen transponder-basierten, kooperativen zweiten Sensor ermittelt werden. Als kooperative Sensoren werden dabei solche Sensoren betrachtet, die Daten nur in Zusammenarbeit mit anderen Sensoren erfassen. Sie sind in der Regel transponderbasiert (etwa ein TCAS II-System, insbesondere mit einem Mode S- oder Mode C-Transponder), können aber auch andere Aussendungen und Squitter-Meldungen wie ADS-B (Automatic Dependent Surveillance-Broadcast; automatische Aussendung abhängiger/zugehöriger Beobachtungsdaten) verwenden.

Dabei verfügt in einer besonders bevorzugten Verfahrensvariante der kooperative zweite Sensor des Luftfahrzeugs über einen empfangenden Transponder der entweder in der Lage ist, Informationen einzelner anderer Luftfahrzeuge in seiner Umgebung zu identifizieren und zu verarbeiten oder/und solche Informationen über den gesamten Flugverkehr von der ATC, gegebenenfalls weiter aufgearbeitet, zu empfangen. Dabei kann beispielsweise ein kooperativer Sensor eines im unmittelbar umgebenden Luftraum befindlichen weiteren Luftfahrzeugs mit dem wenigstens einen kooperativen zweiten Sensor des UAV zur Erarbeitung von Ausweichrouten zusammenarbeiten. Soweit hierbei ein Kollisionsvermeidungssystem eingesetzt ist, können durch dieses bei Selbsttrennung eigenständig Ausweichempfehlungen, insbesondere auch laterale Ausweichempfehlungen erzeugt und selbständig mit anderen Verkehrsteilnehmern abgestimmt werden.

Bei einer bevorzugten Variante des Verfahrens werden durch wenigstens einen Transponder des zweiten Sensors spontan periodische Positions- und Zustandsmeldungen einschließlich absoluter horizontaler Positionsinformationen ausgesendet, so dass in dem Luftraum, den das unter dem Notfallregime fliegende UAV umgibt, weitere Verkehrsteilnehmer ständig mit diesen Meldungen und Informationen versorgt sind.

In einer weiteren bevorzugten Variante des erfindungsgemäßen Verfahrens werden weiterentwickelte Überwachungsumgebungen des Luftfahrzeugs zur Datengewinnung genutzt. Denn im Gegensatz zu Überwachungstechniken, die zur Zeit zum Einsatz kommen, bei der etwa ein bodengebundenes Radar abfragende Signale sendet und die Antworten von Transponder der Luftfahrzeuge zur Standortbestimmung verwendet werden, übertragen dabei beispielsweise ADS-B-fähige Luftfahrzeuge ihre Positionen ihres GNSS-Navigationssystems einmal pro Sekunde. Die Informationen, die von den Kontrollstationen des ATC und anderen ADS-B-Flugzeugen empfangen werden, umfassen die Identifizierung des Luftfahrzeugs, Höhe, Geschwindigkeit, Geschwindigkeit, Geschwindigkeit, projizierter Weg und andere nützliche Informationen. Überdies können bei weiterentwickelten Systemen ADS-B-Daten von speziellen Bodenempfängern empfangen werden, die sie unmittelbar an die Anzeigesysteme im nächstgelegenen Flugkontrollzentrum weiterleiten. Das Flugkontrollzentrum wiederum wird in der Lage sein, Wetter- und andere Daten über den Sender der Bodenstation mit dem Luftfahrzeug zu verbinden. Denkbar ist auch, dass dabei eine weltraumgestützte Infrastruktur für Transpondersignale zum Einsatz kommt.

Für die eigenverantwortliche Staffelung und Wahrnehmung der Verkehrssituation der Luft durch das RPAS, bzw., wenn die Datenverbindung (wieder) etabliert ist, durch dessen PIC, sind also die Fähigkeiten des Transponders des zweiten kooperativen Sensors entscheidend, zum einen Signale über die Überwachungsinformation an andere Verkehrsteilnehmer und die Flugverkehrskontrolle auszusenden, zum anderen Signale von umgebenden Verkehrsteilnehmern oder von ATC zu empfangen und zu verarbeiten. Kann der PIC bei dem UAV steuernd eingreifen, ist es sinnvoll ihm ein Anzeigemittel zur Verfügung zu stellen, welches ihm die Verkehrsinformation geeignet darstellt.
Bei wieder etablierter Datenverbindung kann ggf., wie bereits erwähnt, zu bodengebundener Verkehrstrennung zurückgekehrt werden.

Eine andere zweckmäßige Verfahrensvariante passt mittels der Steuereinrichtung die gewählte Ausweichroute dynamisch an sich ändernde Daten des wenigstens einen zweiten Sensors hinsichtlich eines Kollisionspotentials an und/oder die Ausweichroute kann entsprechend aktuell eingestellter Kriterien geändert werden. Dabei können etwa auch Sicherheits- und Betriebsziele des Luftfahrtsystems berücksichtigt werden, so dass die Logik bei der Abarbeitung von Kriterien auf bestimmte Verfahren oder Luftraumkonfigurationen zugeschnitten werden kann. Dabei handelt es sich um eine Art Optimierungsprozess, um die beste Vorgehensweise je nach Konfliktkontext zu bestimmen. Dabei kann etwa auch ein Belohnungs- und Kostensystem eingesetzt werden, um festzustellen, welche Maßnahmen den größten Nutzen bringen würden (d.h. eine sichere Trennung bei gleichzeitiger Umsetzung eines kosteneffizienten Vermeidungsmanövers). Zu den wichtigsten Kennzahlen für die betriebliche Eignung und die Akzeptanz durch den RP gehört die Minimierung der Häufigkeit von Warnungen, die zu Umkehrungen/absichtlichen Höhenüberquerungen von Eindringlingen oder störenden Hinweisen bei unkritischen Begegnungen führen.

Die obige Aufgabe wird indes auch durch ein zeitweilig unbemanntes Luftfahrzeug der beschriebenen Art gelöst, mit welchem das erfindungsgemäße Verfahren durchgeführt wird.

Die obigen Ausgestaltungen und Weiterbildungen lassen sich, sofern sinnvoll, beliebig miteinander kombinieren. Weitere mögliche Ausgestaltungen, Weiterbildungen und Implementierungen der Erfindung umfassen auch nicht explizit genannte Kombinationen von zuvor oder im Folgenden bezüglich der Ausführungsbeispiele beschriebenen Merkmalen der Erfindung. Insbesondere wird dabei der Fachmann auch Einzelaspekte als Verbesserungen oder Ergänzungen zu der jeweiligen Grundform der vorliegenden Erfindung hinzufügen.

Die Erfindung wird nachstehend anhand von Ausführungsbeispielen in den Figuren der Zeichnung näher erläutert. Dabei zeigen in teilweise stark schematisierter Darstellung
- Fig.1: ein zeitweilig unbemanntes, durch einen PIC gesteuertes RPAS, das über eine Datenverbindung in Voice- und CPDLC-Kontakt mit dem Flugkontrollzentrum steht, dessen Datenverbindung zum PIC aber unterbrochen ist;
- Fig.2: einen beliebigen von dem RPAS durchflogenen Luftraum, in welchem transponderbasierter Kontakt mit weiteren Luftfahrzeugen besteht; und
- Fig.3: eine schematische Darstellung des erfindungsgemäßen Verfahrens in einem Flussdiagramm.

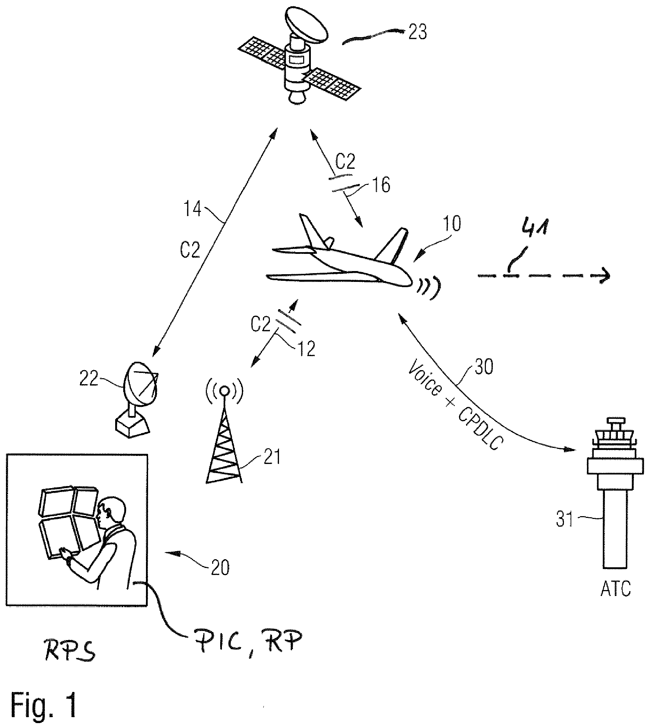

Dabei zeigt die Figur 1 ein zumindest zeitweise unbemanntes Luftfahrzeug 10, welches mit einer Remote Pilot Station RPS über verschiedene C2-Verbindungen 12, 14, 16 bidirektional, also sowohl im uplink als auch im downlink verbunden ist, so dass ein, in der Remote Pilot Station 20 anwesender Pilot (PIC) das Luftfahrzeug 10 steuern kann.

Die unterschiedlichen C2-Verbindungen 12, 14, 16 bilden dabei die Fälle ab, dass das Luft- oder Raumfahrzeug mittels einer C2-Verbindung 12 zum einen über eine Sichtverbindung (Radio Line of Sight, RLOS) zwischen einer Bodenvermittlungsstelle 21 und dem Luft- oder Raumfahrzeug 10 ansprechbar ist, zum anderen bei Fehlen einer Sichtverbindung (Beyond Radio Line Of Sight, BRLOS) durch eine Kombination aus einer Mehrzahl von C2-Verbindungen 14, 16 zum einen zwischen einer Satelliten-Bodenstation 22 und einem Satelliten 23 und dann zwischen dem Satelliten 23 und dem Luft- oder Raumfahrzeug 10. Solange die Delayzeiten bei der Signalübermittlung kurz gehalten werden können, kann die Remote Pilot Station RPS von den Bodenvermittlungsstellen 21, 22 auch beabstandet angeordnet sein.

Dabei sind in der Fig. 1 diejenigen beiden der Verbindungen 12, 16, die sonst zur Verfügung stehen und zu dem RPAS führen, unterbrochen dargestellt, um zu verdeutlichen, dass der RP zum dargestellten Zeitpunkt keine Einflussmöglichkeit auf die Steuerung des RPAS 10 hat.

Nicht weiter dargestellt ist in der Fig.1 eine Telefonverbindung, mittels derer die Remote Pilot Station RPS als Bodenstation mit der Kontrollinstanz 31 auch bei Ausfall der C2-Verbindung kommunizieren könnte. Zu erkennen ist in der Fig.1 schließlich noch eine CPDLC-Verbindung 30 als Datenfunkverbindung zwischen dem Luftfahrzeug 10 und einer Kontrollinstanz, dem ATC-Kontroller 31.

Gezeigt ist in der Fig.1 derjenige Zeitpunkt, an welchem bei unterbrochenen Datenverbindungen 12, 16 mit dem Luftfahrzeug 10 durch die nicht weiter dargestellte Steuereinrichtung anhand von ersten Daten zumindest eines, ebenfalls nicht weiter dargestellten ersten Sensors eine Gefahren- und/oder Notfallsituation identifiziert wird, die eine Abweichung von dem freigegebenen Flugplan erforderlich macht.

Das UAV 10 beginnt in diesem Zeitpunkt mit der Aussendung eines Signals, das sowohl Informationen hinsichtlich seiner von ersten Sensoren gewonnenen Positions- und Zustandsdaten enthält, als auch eine Information hinsichtlich seines Notfallzustandes. Der strichlinierte Pfeil deutet die Planung einer Abweichung von dem ursprünglichen Kurs in Form einer geplanten Ausweichroute 41 unter Durchführung einer eigenverantwortlichen Staffelung, also einer Selbsttrennung, des UAV 10 an. Die des Steuereinrichtung des UAV 10 ermittelt dafür anhand von zweiten Daten wenigstens eines zweiten Sensors eine der Gefahren- und/oder Notfallsituation ausweichende, ein oder mehrere Ausweichmanöver umfassende tatsächliche Ausweichroute 42 des UAV.

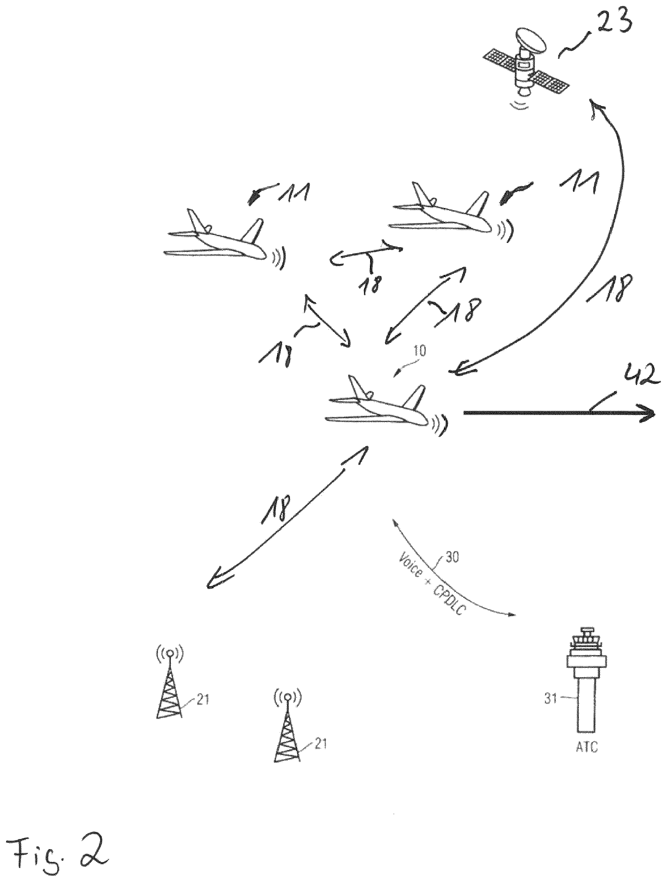

Die betreffende, durch den durchgezogenen Pfeil angedeutete Ausweichroute 42 ist in der Fig.2 besser zu erkennen, mit dieser wird zumindest zwischenzeitlich ein Zielgebiet angesteuert, das mit einem möglichst geringen Aufkommen an Luftverkehr beaufschlagt ist. Das oder die notwendigen Ausweichmanöver der Ausweichroute 42 werden anhand der zweiten Daten durch die Steuereinrichtung in eigenverantwortlicher Staffelung, also in Selbsttrennung, durchgeführt. Das UAV 10 entfernt sich hierbei mit der Ausweichroute 42 von anderen Verkehrsteilnehmern in Form von Luftfahrzeugen 11, wobei das UAV 10 und andere Luftfahrzeuge 11 über transponderbasierte kooperative Sensoren miteinander kommunizieren, was durch die transponderbasierten Kommunikationsverbindungen des UAV 10 mit anderen Luftfahrzeugen 11, Bodenvermittlungsstellen 21, einem Satelliten und der Flugverkehrskontrolle ATC 31 dargestellt ist
Weiter erkennt man, dass die Sprach- und/oder CPDLC-Datenfunkverbindung mit dem ATC-Kontroller durchaus weiter vorhanden sein kann.

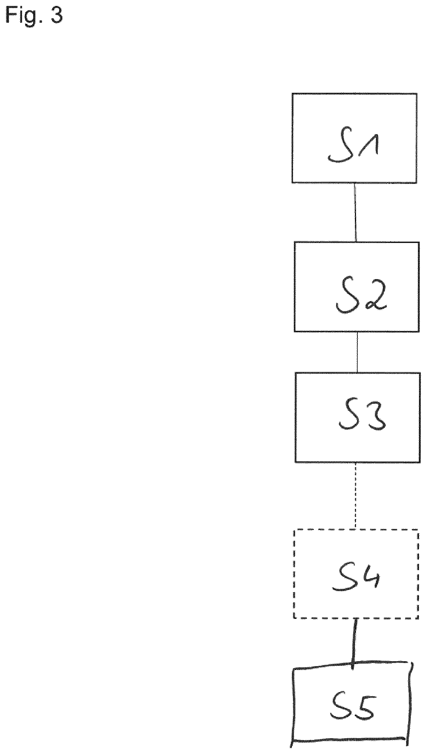

In der Fig. 3 ist in Form eines Flussdiagramms ein Ablauf des erfindungsgemäßen Verfahrens gezeigt. Dabei zeigt ein Schritt S1 die Identifikation einer Gefahren- und/oder Notfallsituation durch die Steuereinrichtung des UAV 10 anhand von ersten Daten zumindest eines ersten Sensors. In einem Schritt S2 geht unter diesem Notfallregime das UAV 10 zu einer eigenverantwortlichen Staffelung, der Selbsttrennung, über und sendet ein entsprechendes Signal über wenigstens einen seinen Transponder aus. Die Steuereinrichtung ermittelt anhand von zweiten Daten wenigstens eines zweiten Sensors eine der Gefahren- und/oder Notfallsituation ausweichende, ein oder mehrere Ausweichmanöver umfassende geplante Ausweichroute 41, 42 für das UAV in einem Schritt S3, wobei über die zu ermittelnde Ausweichroute 41, 42 zumindest zwischenzeitlich ein Zielgebiet angesteuert wird, das mit einem möglichst geringen Aufkommen an Luftverkehr beaufschlagt ist.

In einem fakultativen Schritt S4 der Fig.3 wird die gewählte Ausweichroute durch die Steuereinrichtung dynamisch an sich ändernde Daten des wenigstens einen zweiten Sensors hinsichtlich eines Kollisionspotentials angepasst wird und die Ausweichroute entsprechend der implementierten und aktuell eingestellten Kriterien geändert.

In einem Schritt S5 der in der Fig.3 gezeigten Variante des Verfahrens ist die Datenverbindung zur Steuerung des UAV 10 erneut etabliert, die Selbsttrennung wird unterbrochen und das Luftfahrzeug 10 wird unter Rückkehr auf seinen ursprünglichen Kurs zu seinem Ziel geführt wird.

Der zuvor beschriebene Mechanismus ist insbesondere unter Bedingungen mit Zeitdringlichkeit nützlich, also dann, wenn keine ausreichende Zeit für das RPAS verfügbar ist, geeignete Abweichungen vom Flugplan zu identifizieren und anschließend Freigabeanforderungen an den ATC-Kontroller 31 zu übermitteln, damit dieser diese Freigabebitten beurteilen und eine Rückmeldung über eine Datenfunkverbindung 30, bspw. eine CPDLC-Verbindung, liefern kann.

Obwohl die vorliegende Erfindung anhand bevorzugter Ausführungsbeispiele vorstehend beschrieben wurde, ist sie darauf nicht beschränkt, sondern auf vielfältige Art und Weise modifizierbar. Insbesondere lässt sich die Erfindung in mannigfaltiger Weise verändern oder modifizieren, ohne vom Kern der Erfindung abzuweichen.

### Bezugszeichenliste

- 10: Luftfahrzeug, RPAS, UAV
- 11: anderes Luftfahrzeug
- 12: C2-Verbindung
- 14: C2-Verbindung
- 16: C2-Verbindung
- 18: transponderbasierte Datenverbindung
- 20: Remote Pilot Station RPS
- 21: Bodenvermittlungsstelle
- 22: Satelliten-Bodenstation
- 23: Satellit
- 30: VHF-Datenfunk-Verbindung
- 31: Kontrollinstanz, ATC, Flugverkehrskontrolle
- 41: geplante Ausweichroute
- 42: tatsächliche Ausweichroute

- S1-S5: Verfahrensschritte des erfindungsgemäßen Verfahrens

## Patentansprüche

1. Verfahren zum Betrieb eines zumindest zeitweise unbemannten Luftfahrzeugs (10), wobei ein Flugvorgang des Luftfahrzeugs (10) gemäß eines zuvor freigegebenen Flugplans in einem von wenigstens einer Kontrollinstanz (31) kontrollierten Luftraum durchgeführt wird, wobei eine Flugrichtung des Luftfahrzeugs (10) während des Flugvorgangs über eine Steuereinrichtung bestimmt wird, die über wenigstens eine Datenverbindung (12, 14, 16) mittels einer Steuerinstanz beeinflussbar ist, wobei die Datenverbindung (12, 14, 16) während des Flugvorgangs zumindest zeitweise nicht zur Verfügung steht, und wobei durch die Steuereinrichtung anhand von ersten Daten zumindest eines ersten Sensors eine Gefahren- und/oder Notfallsituation identifiziert wird, die eine Abweichung von dem freigegebenen Flugplan erforderlich macht,
wobei durch die Steuereinrichtung anhand von zweiten Daten wenigstens eines zweiten Sensors eine der Gefahren- und/oder Notfallsituation ausweichende, ein oder mehrere Ausweichmanöver umfassende Ausweichroute (41, 42) des Luftfahrzeugs (10) ermittelt wird,
wobei über die zu ermittelnde Ausweichroute (41, 42) zumindest zwischenzeitlich ein Zielgebiet angesteuert wird, das mit einem möglichst geringen Aufkommen an Luftverkehr beaufschlagt ist; und
wobei das oder die notwendigen Ausweichmanöver der Ausweichroute (41, 42) anhand der zweiten Daten durch die Steuereinrichtung in eigenverantwortlicher Staffelung durchgeführt werden.

2. Verfahren nach Anspruch 1, wobei durch das Luftfahrzeug (10) bei Übergang in die eigenverantwortliche Staffelung bis zu deren Beendigung dauerhaft ein Signal ausgesandt wird, durch welches andere Teilnehmer des Luftverkehrs über diesen Umstand informiert werden.

3. Verfahren nach Anspruch 1 oder 2, wobei die eigenverantwortliche Staffelung bei der Durchführung des oder der Ausweichmanöver der Ausweichroute (41, 42) ohne vorherige Genehmigung durch die wenigstens eine Kontrollstation (31) stattfindet.

4. Verfahren nach einem der vorhergehenden Ansprüche, wobei als zusätzliches Kriterium bei der Ansteuerung des Zielgebiets die Verringerung von Kollisionspotential mit anderen Luftfahrzeugen angestrebt wird.

5. Verfahren nach einem der vorhergehenden Ansprüche, wobei die eigenverantwortliche Staffelung bei der Durchführung des oder der Ausweichmanöver mindestens bis zur Wiederherstellung der Datenverbindung (12, 14, 16) mit der Steuerinstanz der Steuereinrichtung des Luftfahrzeugs (10) aufrechterhalten wird.

6. Verfahren nach einem der vorhergehenden Ansprüche, wobei die eigenverantwortliche Staffelung auch bei wiederhergestellter Datenverbindung zwischen der Steuerinstanz und dem Luftfahrzeug (10) aufrechterhalten wird.

7. Verfahren nach einem der Ansprüche 1 bis 5, wobei bei erneuter Etablierung der Datenverbindung die eigenverantwortliche Staffelung unterbrochen wird und das Luftfahrzeug (10) auf einen anderen oder den ursprünglichen Kurs zurückgeführt wird.

8. Verfahren nach einem der vorhergehenden Ansprüche, wobei die ersten Sensordaten durch wenigstens einen nicht-kooperativen ersten Sensor zur Verfügung gestellt werden.

9. Verfahren nach einem der vorhergehenden Ansprüche, wobei die zweiten Sensordaten durch wenigstens einen transponder-basierten, kooperativen zweiten Sensor ermittelt werden.

10. Verfahren nach einem der vorhergehenden Ansprüche, wobei der kooperative zweite Sensor des Luftfahrzeugs mit einem Transponder versehen wird, der in der Lage ist, Aussendungen anderer Sensoren zu empfangen und zu verarbeiten.

11. Verfahren nach Anspruch 9 oder 10, wobei durch den wenigstens einen Transponder des zweiten Sensors spontan periodische Positions- und Zustandsmeldungen einschließlich absoluter horizontaler Positionsinformationen ausgesendet werden.

12. Verfahren nach einem der vorhergehenden Ansprüche, wobei durch die Steuereinrichtung des Luftfahrzeugs (10) und/oder wenigstens einen der Sensoren weiterentwickelte Überwachungsumgebungen des Luftfahrzeugs (10) zur Datengewinnung genutzt werden.

13. Verfahren nach einem der vorhergehenden Ansprüche, wobei dem Luftfahrzeug (10) ein Anzeigemittel zugeordnet ist, welches der Steuerinstanz im Falle von externer Steuerung einen Überblick über die verfügbaren Verkehrsinformationen gestattet.

14. Verfahren nach einem der vorhergehenden Ansprüche, wobei die gewählte Ausweichroute (41, 42) durch die Steuereinrichtung dynamisch an sich ändernde Daten des wenigstens einen zweiten Sensors hinsichtlich eines Kollisionspotentials angepasst wird und/oder die Ausweichroute (41, 42) entsprechend der aktuell eingestellten Kriterien geändert wird.

15. Zumindest zeitweise unbemanntes Luftfahrzeug (10) welches nach einem zuvor freigegebenen Flugplan einen kontrollierten Luftraum durchfliegt, bei welchem eine Datenverbindung, über welche das Luftfahrzeug steuerbar ist oder gesteuert wird, bei Durchfliegen des Luftraums zumindest zeitweise nicht zur Verfügung steht, zur Durchführung eines Verfahrens nach einem der vorhergehenden Ansprüche.
